# DEMANDE DE BREVET EUROPEEN

(11) **EP 2 730 387 A1**
(43) Date de publication de la demande: **14.05.2014**
(21) Numéro de dépôt: 13192170.2
(22) Date de dépôt: 08.11.2013
(51) Int. Cl.: B29C 45/00, A47B 91/12

(54) **Procédé de fabrication d'un élément de mobilier ou de décoration et élément ainsi obtenu**

(30) Priorité: 09.11.2012 FR 1260628
(71) Demandeur: Phoenix Innoplast, 64400 Oloron Sainte Marie (FR)
(72) Inventeur: Hodl, Manfred, 64400 Bidos (FR); Marques, Georges, 64400 Poey d'Oloron (FR)
(74) Mandataire: Agasse, Stéphane

(57) **Abrégé**

L'invention concerne un procédé de fabrication d'un élément de mobilier ou de décoration, de volume simple, ledit élément comprenant au moins deux parties, une partie interne de soutien et une partie externe d'habillage fixée à la partie interne, caractérisé en ce que le procédé comprend les étapes suivantes :
On dispose d'une part, d'une structure de soutien constituant la partie interne de soutien dudit élément, et d'autre part, au moins d'une matière thermoplastique, d'un mélange maître dit d'apparence, comprenant un agent colorant et une matière thermoplastique porteuse, et d'un moule à injection pour la fabrication par injection de ladite partie externe ;
On réalise le moulage par injection de la partie externe avec la matière thermoplastique, cette dernière étant injectée dans le moule depuis un point de symétrie dudit moule, à partir duquel le moule est rempli ; et
On fixe la partie externe sur la partie interne pour obtenir ledit élément.

L'invention concerne aussi un élément de mobilier ou de décoration ainsi obtenu.

## Description

L'invention concerne un procédé de fabrication d'un élément de mobilier ou de décoration, cet élément comprenant deux parties, l'une, interne, de soutien, l'autre, externe, d'habillage, fixée à la partie interne, ainsi que l'élément obtenu par ce procédé.

Pour des raisons économiques concernant la matière première et le procédé de fabrication, de tels éléments sont généralement produits en bois, en métal ou en plastique pour constituer la partie de soutien, puis recouverts d'un habillage rappelant le matériau du mobilier ou imitant tout autre matériau désiré, par exemple naturel comme le bois, le marbre. L'étape d'habillage est réalisée par un traitement de surface, tel que l'application d'une peinture, éventuellement d'un vernis, une impression sur plastique, ou par trempage. Dans le cas d'une imitation de l'aluminium, cette étape peut aussi consister en un chromage décoratif. Le résultat peut être visuellement réussi, cependant, ces divers procédés comportent plusieurs inconvénients :
- Nécessité d'une étape supplémentaire de décoration qui relève d'une technique différente de celle de l'obtention de la partie de soutien, et qui par conséquent augmente le prix de revient de l'élément ;
- L'habillage n'est qu'un revêtement de surface, il est mince et fragile, et toute manipulation indélicate, même minime telle qu'un impact, le détériorera visiblement.

La présente invention a notamment pour but de remédier à ces inconvénients, avec la mise au point d'un procédé de fabrication d'un élément de mobilier qui esthétiquement est très proche de l'aspect de la matière imitée, tout en étant résistant aux dégradations. En outre, l'aspect de l'élément restera stable vis-à-vis du vieillissement, ainsi que vis-à-vis de son nettoyage mécanique et/ou chimique. Le procédé de fabrication est en outre simplifié en ce qu'il peut ne faire appel qu'à la technique d'injection plastique. Il permet aussi d'obtenir un élément de mobilier qui peut être beaucoup plus léger que les éléments commercialisés, sans que ses performances mécaniques, de soutien notamment, soient affectées.

Ainsi, un objet de l'invention est un procédé de fabrication d'un élément de mobilier, ledit élément comprenant au moins deux parties, une partie interne de soutien et une partie externe d'habillage fixée à la partie interne, ce procédé comprenant les étapes suivantes :

On dispose d'une part, d'une structure de soutien constituant la partie interne de soutien dudit élément, et d'autre part, au moins d'une matière thermoplastique, d'un mélange maître dit d'apparence comprenant un agent colorant et une matière thermoplastique porteuse, et d'un moule à injection pour la fabrication par injection de ladite partie externe ;

On réalise le moulage par injection de la partie externe avec la matière thermoplastique, cette dernière étant injectée dans le moule depuis un point de symétrie dudit moule, à partir duquel le moule est rempli ;

On fixe la partie externe sur la partie interne pour obtenir ledit élément.

Ce procédé permet d'obtenir tout type d'aspect, de l'aspect le plus lisse à un aspect plus ou moins nervuré imitant l'aspect de la ronce de bois ou du marbre.

Selon une première variante de mise en oeuvre, le procédé est destiné à obtenir un élément d'aspect homogène et lisse, mat ou brillant, et à cet effet, le mélange maître d'apparence est complètement miscible à la matière thermoplastique quand elle est à l'état fondu, et le moule d'injection pour obtenir la partie externe, est dépourvu, sur sa face interne, de tout obstacle. Il permet par exemple de reproduire le visuel de l'aluminium, du chrome, du bronze ou tout autre effet métallisé.

Selon une seconde variante de mise en oeuvre, le procédé est destiné à obtenir un élément ayant l'aspect d'une matière veinée, comme celui du bois ou du marbre ; à cet effet, le mélange maître d'apparence n'est pas miscible ou n'est que partiellement miscible à la matière thermoplastique quand elle est à l'état fondu, et le moule à injection comporte, sur sa face interne, des protubérances.

La miscibilité incomplète entre, d'une part, la matière thermoplastique et d'autre part, le mélange maître d'apparence, produit un réseau de filaments de la couleur du mélange maître d'apparence, dans la matière thermoplastique.

Toutes techniques et/ou propriétés des matériaux mis en jeu dans ce procédé, entraînant cette miscibilité incomplète peuvent être utilisées et entrent dans le cadre de la présente invention. Avantageusement, elle est atteinte par l'une des voies suivantes :
- la température de fusion du mélange maître d'apparence est supérieure à celle de la matière thermoplastique ;
- le mélange maître d'apparence est incompatible avec la matière thermoplastique, à l'état fondu.

La matière thermoplastique mise en oeuvre dans ce procédé peut être colorée ou non. Qu'elle soit colorée ou non, elle peut être à colorer au cours du procédé. Dans ce cas, alors on dispose en outre d'au moins un mélange maître dit de fond comprenant un agent colorant et une matière thermoplastique porteuse, qui permettra la coloration, voire recoloration de la matière thermoplastique.

En pratique et lorsqu'on emploie une matière thermoplastique à colorer, le mélange maître d'apparence est introduit de préférence, après coloration de la matière thermoplastique par le mélange maître de fond.

Avant d'exposer plus en détails l'invention, la définition de quelques termes employés est ci-après donnée.

Par élément de mobilier, on entend toute partie ou accessoire d'un meuble ou de tout autre objet d'aménagement d'un espace, ledit élément étant généralement suffisamment visible pour qu'il nécessite d'être esthétique. La description qui suit sera plus spécifiquement faite en référence à un pied de lit, en tant qu'élément de mobilier, mais l'invention n'y est bien entendu pas restreinte. Par élément décoratif, on comprend par exemple, des poignées, des éléments de façade ou du sol, des appliques, etc.

Un mélange maître est une notion bien connue de l'homme du métier des plastiques. Il comprend classiquement un ou des pigments que l'on regroupe dans la présente description, sous l'expression « agent colorant », incluant tout type de pigment, quelle que soit sa forme, et une matière thermoplastique porteuse dans laquelle est dispersé l'agent colorant ; d'autres moyens de coloration sont également couverts par l'invention, comme les colorants liquides, en poudre, etc.

L'étape d'injection ou d'injection plastique pour l'obtention de la partie externe de l'élément met en oeuvre une technique elle aussi bien maîtrisée par l'homme du métier des plastiques et, sous l'expression « étape d'injection », on entend l'ensemble des opérations, conditions (températures, vitesse d'injection, pressions, quantités des matériaux...) et outillages nécessaires à sa réalisation, depuis l'alimentation en matières telles que définies précédemment jusqu'à l'éjection de la pièce.

Par volume simple, caractérisant l'élément de mobilier ou de décoration, et plus particulièrement sa partie externe d'habillage, on comprend toutes formes évitant toutes perturbations du flux de la matière lors de l'injection, c'est-à-dire des volumes dépourvus notamment d'angles saillants, de parois intérieures, d'évidements, etc. A titre d'exemples, on peut citer des volumes comme des cylindres, des boules, des cônes, des galets, tous polyèdres comme des pyramides, des dés.

Selon la présente description, l'expression « matière thermoplastique » fait référence à la matière thermoplastique constitutive de l'élément, à distinguer de l'expression « matière thermoplastique porteuse » qui concerne la matière du ou des mélanges maître. Les matières thermoplastiques de l'invention, tant celles constitutives de l'élément que celles des mélanges maîtres sont identiques ou différentes, sont à base de polymères qui peuvent être choisis parmi tous polymères appropriés et notamment parmi les polyoléfines, comme les polyéthylènes et les polypropylènes ; les polyamides ; les polystyrènes ; les copolymères de ceux-ci ; les élastomères ; et tous mélanges de ces polymères et copolymères. Ces matières thermoplastiques peuvent en outre comprendre des charges, des plastifiants, des additifs. Comme dit précédemment, la matière thermoplastique constitutive de l'élément mise en oeuvre dans le procédé de l'invention est à colorer auquel cas, un mélange maître qu'on a appelé de fond, lui est ajoutée pour la colorer de manière homogène, ou est déjà colorée et/ou n'est pas à colorer.

Le procédé de l'invention permet, selon les matières et le moule utilisés, d'obtenir un aspect uni ou veiné.

Le choix du ou des mélanges maître ou colorant est un paramètre essentiel dans la mise en oeuvre du procédé de l'invention.

Pour la fabrication d'un élément d'aspect uni et lisse, le mélange maître d'apparence doit présenter une température de fusion identique à celle de la matière thermoplastique.

Pour la fabrication d'un élément d'aspect veiné, selon une variante du procédé de l'invention, le mélange maître d'apparence présente une température de fusion supérieure à celle de la matière thermoplastique, une valeur de 20 à 40°C de plus étant préférée.

Selon cette variante, au début de l'étape d'injection, au cours de la phase d'alimentation des matières par une ou plusieurs trémies d'alimentation, ce mélange maître d'apparence ou colorant ne fond pas encore et c'est environ à l'entrée dans le moule qu'il se répand dans la matière thermoplastique colorée par le mélange maître de fond ou colorée dès l'origine, constitutive du fond de l'élément, de manière aléatoire, mais en formant un réseau de filaments assimilables aux veines d'un bois ou d'un marbre.

Selon une autre variante, le mélange maître d'apparence présente une incompatibilité avec la matière thermoplastique, créant le même effet que celui décrit ci-dessus, par un mélange hétérogène. L'incompatibilité entre polymères est une notion bien connue de l'homme du métier. Ainsi, de manière générale, des polymères de la même famille sont compatibles entre eux, des polymères de familles différentes sont incompatibles. A titre d'exemples, les polymères appartenant à la famille des polyoléfines, type PP, PEHD sont compatibles entre eux; un propylène et un polyamide, ou bien un polypropylène et un copolymère acrylonitrile-butadiène-styrène sont incompatibles

Avantageusement, pour l'obtention d'un visuel imitant le bois, le mélange maître d'apparence est plus foncé ou plus clair que la matière thermoplastique, il varie de préférence entre une couleur marron et une couleur noire ou entre une couleur beige et une couleur blanche ; pour l'obtention d'un visuel imitant le marbre, le mélange maître d'apparence est coloré et la matière thermoplastique est claire. De toute façon, le choix de la couleur des agents colorants du ou des mélanges maître relève de l'aptitude de l'homme du métier, en fonction de l'aspect recherché.

L'aspect de l'élément peut être accentué par un autre paramètre, la morphologie du moule. Pour fabriquer un élément d'aspect uni, le moule d'injection possède avantageusement une surface interne et externe avec des angles non saillants et non nervurés permettant une répartition homogène des matières dans le moule avec un seuil d'injection positionné d'une manière à répartir la matière avec un minimum des contraintes du flux, à l'origine de l'entière uniformité de la matière thermoplastique ainsi colorée. Pour obtenir un élément d'aspect veiné, le moule comporte avantageusement diverses protubérances prévues sur sa paroi interne qui génèrent des turbulences dans le flux de matière. Ces turbulences viennent compléter l'action du premier paramètre en créant un réseau secondaire dudit mélange maître d'apparence, accentuant ainsi l'aspect veiné.

Comme il ressortira d'une description plus détaillée du procédé, un autre avantage réside dans l'absence de ligne de soudure sur l'élément. A cet effet, le moule est alimenté en un point de symétrie, depuis lequel la matière thermoplastique et le mélange maître d'apparence se répartissent, également de part et d'autre dudit point, jusqu'au remplissage du moule, sans créer de ligne de soudure.

Une fois la partie externe d'habillage obtenue, elle est fixée sur la partie interne de soutien. Elle peut l'être par tout moyen, notamment collage, clipsage, par soudure, par exemple aux ultrasons. Le choix de la fixation dépendra essentiellement de la matière qui constitue la partie interne. La partie externe recouvre tout ou partie de la partie interne. Avantageusement, elle ne recouvre que partiellement la partie interne, permettant ainsi d'obtenir un élément de mobilier allégé.

La présente invention a aussi pour objet un élément de mobilier ou de décoration, et notamment un pied de lit, pouvant être obtenu selon le procédé précédemment décrit, sans limiter l'invention à cette application.

D'autres caractéristiques et avantages de l'invention apparaîtront au cours de la description suivante de plusieurs formes de réalisation données à titre d'illustration non limitative, en référence aux figures jointes et aux exemples suivants décrivant la partie interne d'un pied de lit, de forme essentiellement cylindrique sur laquelle la partie externe d'habillage s'adapte :
- La figure 1 est une vue en coupe longitudinale d'un moule d'injection dont la paroi interne est lisse, pour la fabrication d'une partie externe d'un pied de lit selon l'invention
- La figure 2 est une vue en coupe longitudinale d'un moule d'injection dont la paroi interne présente des protubérances, pour la fabrication d'une partie externe d'un pied de lit selon l'invention
- La figure 3 est une vue en coupe longitudinale d'un pied de lit selon l'invention.

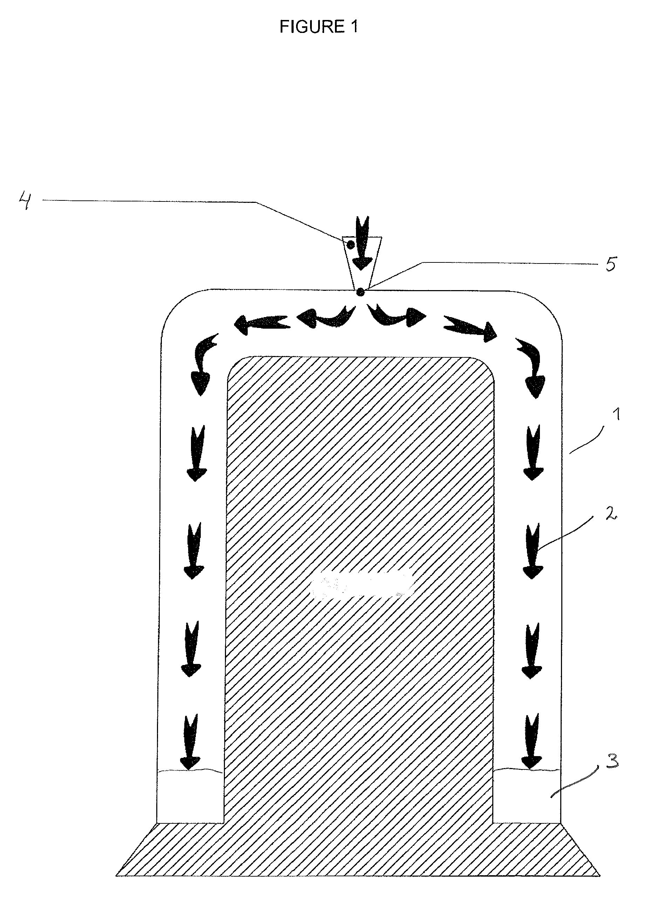

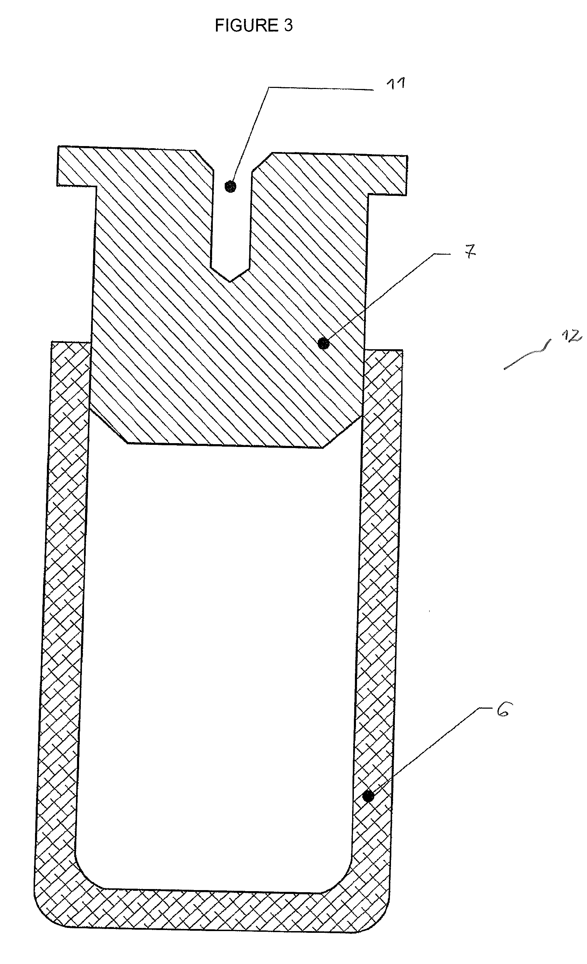

La figure 1 représente un moule d'injection 1 ainsi que le flux 2 du mélange 3, matière thermoplastique et mélange maître d'apparence, depuis la sortie de la vis d'alimentation, non représentée, à l'entrée 4 du moule 1, située en un point traversé par un axe de symétrie 5 du moule 1. Le mélange 3 parvient à l'entrée 4, à l'état fondu et homogène, et se répand de part et d'autre du moule 1, jusqu'à son remplissage ; aucune ligne de soudure ne sera formée ; une fois refroidie et éjectée, et comme représentée à la figure 3, la pièce ou partie externe 6 du pied, sera fixée sur la partie interne de soutien 7.

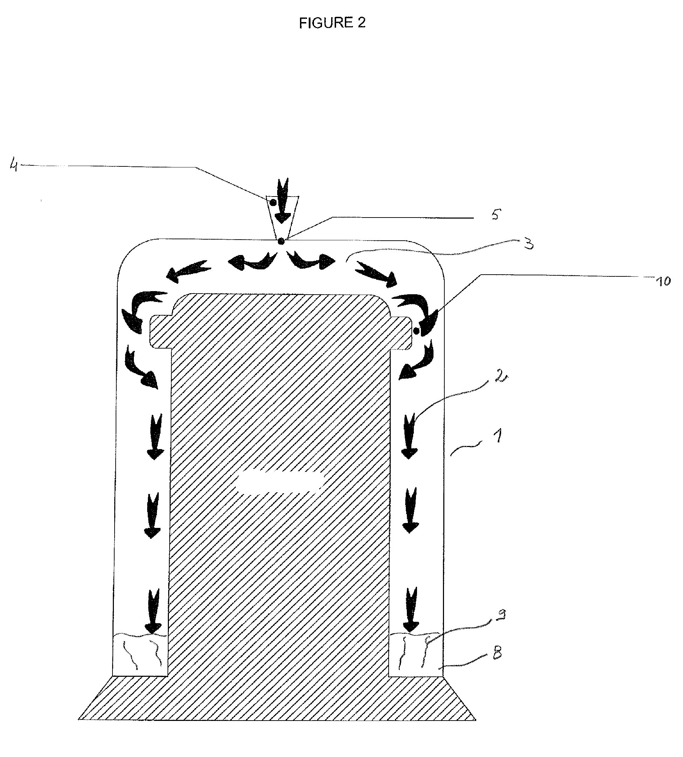

La figure 2 représente un moule d'injection 1 ainsi que le flux 2 du mélange 3, matière thermoplastique et mélange maître de fond, d'une part, et mélange maître d'apparence, d'autre part, depuis la sortie de la vis d'alimentation, non représentée, à l'entrée 4 du moule 1, située en un point traversé par un axe de symétrie 5 du moule 1. Le mélange 3 parvient à l'entrée 4, à l'état fondu, sous la forme d'une partie homogène 8 de ce mélange correspondant à la matière thermoplastique et au mélange maître de fond, et une partie sous forme de filaments 9 correspondant au mélange maître d'apparence. Le moule 1 est équipé de protubérances 10 sur sa paroi interne. L'ensemble se répand de part et d'autre du moule 1, jusqu'à son remplissage, en franchissant les protubérances 10 ; aucune ligne de soudure ne sera formée ; une fois refroidie et éjectée, et comme représentée à la figure 3, la pièce ou partie externe 6 du pied, sera fixée sur la partie interne de soutien 7.

La figure 3 représente un pied de lit 12, comprenant une partie interne 7, sur le bas de laquelle est fixée la partie externe 6. L'échancrure 11 dans la pièce interne 7 est le site de fixation de la partie interne sur le lit.

Les exemples ci-après illustrent un procédé de fabrication d'un pied de lit selon l'invention.

### Exemple 1 : fabrication de la partie externe d'un pied de lit imitation aluminium

### Outils :

- Presse à injection horizontale
- Moule tel que représenté à la figure 1

### Matières premières :

- Polypropylène sans coloration, sous forme de granulés, ayant un point de fusion de 200°C
- Mélange maître d'apparence comprenant une matière thermoplastique porteuse de polypropylène et des pigments aluminium chromé sous forme de granulés ayant un point de fusion identique au polypropylène ci-dessus

### Procédé :

La matière thermoplastique est mélangée avec le mélange maître selon la préconisation du fabricant, à raison de 2% en poids de mélange maître par rapport au poids total du mélange sec.

Le mélange est chauffé à 200°C dans la vis d'injection, puis injecté dans le moule.

La pression est maintenue pendant 10 secondes, après lesquelles le moule est maintenu fermé et laissé à refroidir pendant environ 40 secondes.

Après refroidissement, le moule est ouvert et la pièce est éjectée.

Grâce à la forme et à la construction du moule aucune trace de soudure n'apparaît.

### Exemple 2 : fabrication de la partie externe d'un pied de lit

### aspect ronce de merisier

### Outils :

- Presse à injection horizontale
- Moule tel que représenté à la figure 1

### Matières premières :

- Polypropylène, sous forme de granulés, ayant un point de fusion de 200°C
- Mélange maître de fond comprenant une matière thermoplastique porteuse de polypropylène et des pigments marron, sous forme de granulés, ayant un point de fusion identique au polypropylène ci-dessus
- Mélange maître d'apparence comprenant une matière thermoplastique porteuse de polypropylène et des pigments marron foncé, sous forme de granulés, ayant un point de fusion de 220°C.

### Procédé :

La matière thermoplastique de polypropylène est mélangée avec les deux mélanges maître, à raison de 2% en poids du mélange maître de fond et 0,5% en poids du mélange maître d'apparence par rapport au poids total du mélange sec.

Le mélange est porté à 200°C dans la vis d'injection, puis est injecté dans le moule. Il enveloppe la partie interne.

La matière thermoplastique et le mélange maître de fond fondent d'une manière homogène dans un four en amont de la vis d'injection pour obtenir la couleur du fond. Le mélange maître d'apparence ne commence à fondre qu'à l'entrée dans le moule en créant des filaments qui se mélangent partiellement avec la couleur du fond et donne un aspect ronce de bois.

La pression est maintenue pendant 10 secondes, après lesquelles le moule est maintenu fermé et laissé à refroidir pendant environ 40 secondes.

Après refroidissement, le moule est ouvert et la pièce est éjectée.

En choisissant les mélanges maître appropriés, ce procédé peut être appliqué à la fabrication d'éléments imitant l'aspect du marbre. A cet effet, le mélange maître de fond est blanc et le mélange maître d'apparence est bleu, noir ou rose.

### Exemple 3 : fabrication de la fabrication externe d'un pied de lit aspect hêtre veiné

### Outils :

- Presse à injection horizontale
- Moule tel que représenté à la figure 2

### Matières premières :

- Polypropylène naturel sans coloration, sous forme de granulés, ayant un point de fusion de 200°C
- Mélange maître de fond comprenant une matière thermoplastique porteuse de polypropylène et des pigments bronze et rose caramel, sous forme de granulés, ayant un point de fusion identique à celui du polypropylène ci-dessus
- Mélange maître d'apparence comprenant une matière thermoplastique porteuse de polypropylène et des pigments blanc paille, sous forme de granulés et ayant une température de fusion de 240°C.

### Procédé :

La matière thermoplastique de polypropylène est mélangée avec les deux mélanges maître, à raison de 2% en poids du mélange maître de fond et 0,5% en poids du mélange maître d'apparence, par rapport au poids total du mélange.

Le mélange est porté à 200°C, dans la vis d'injection puis est injecté dans le moule.

La matière thermoplastique et le mélange maître de fond fondent d'une manière homogène dans un four en amont de la vis d'injection, créant ainsi la couleur du fond. Le mélange maître d'apparence ne commence à fondre qu'à l'entrée dans le moule en créant, à l'endroit des perturbations dans le moule, des filaments qui se mélangent partiellement avec la couleur du fond et donne un aspect hêtre veiné.

La pression est maintenue pendant 10 secondes, après lesquelles le moule est maintenu fermé et laissé à refroidir pendant environ 40 secondes.

Après refroidissement, le moule est ouvert et la pièce est éjectée.

En choisissant les mélanges maître ou autre type de colorant appropriés, ce procédé peut être appliqué à la fabrication d'éléments imitant d'autres essences de bois.

## Revendications

1. Procédé de fabrication d'un élément (12) de mobilier ou de décoration, de volume simple, ledit élément comprenant au moins deux parties, une partie interne (7) de soutien et une partie externe (6) d'habillage fixée à la partie interne (7), **caractérisé en ce que** le procédé comprend les étapes suivantes :
On dispose d'une part, d'une structure de soutien constituant la partie interne (7) de soutien dudit élément, et d'autre part, au moins d'une matière thermoplastique (3), d'un mélange maître dit d'apparence, comprenant un agent colorant et une matière thermoplastique porteuse, et d'un moule à injection (1) pour la fabrication par injection de ladite partie externe (6) ;
On réalise le moulage par injection de la partie externe avec la matière thermoplastique (3), cette dernière étant injectée dans le moule (1) depuis un point de symétrie (4) dudit moule (1), à partir duquel le moule (1) est rempli ; et
On fixe la partie externe (6) sur la partie interne (7) pour obtenir ledit élément.

2. Procédé selon la revendication 1, **caractérisé en ce que** la partie externe (6) d'habillage a l'aspect d'une matière unie et lisse, mate ou brillante, comme l'aluminium, le bronze ou tout autre aspect métallisé, et qu'à cet effet, le mélange maître d'apparence est complètement miscible à la matière thermoplastique (3) quand elle est à l'état fondu, et le moule (1) est dépourvu, sur sa face interne, de tout obstacle.

3. Procédé selon la revendication 1, **caractérisé en ce que** la partie externe (6) d'habillage a l'aspect d'une matière naturelle veinée, comme le bois ou le marbre, et qu'à cet effet, le mélange maître d'apparence n'est pas miscible ou n'est que partiellement miscible à la matière thermoplastique (3) quand elle est à l'état fondu, et le moule (1) comporte, sur sa face interne, des protubérances (10).

4. Procédé selon la revendication 1 ou 3, **caractérisé en ce que** la température de fusion du mélange maître d'apparence est supérieure à celle de la matière thermoplastique (3).

5. Procédé selon l'une quelconque des revendications 1 ou 3, **caractérisé en ce que** le mélange maître d'apparence est incompatible avec la matière thermoplastique (3) quand elle est à l'état fondu.

6. Procédé selon l'une quelconque des revendications 1 à 5, **caractérisé en ce que** le volume de l'élément (12) de mobilier ou de décoration est dépourvu d'angles saillants, de parois intérieures et d'évidements.

7. Procédé selon l'une quelconque des revendications 1 à 6, **caractérisé en ce que** la matière thermoplastique (3) est à colorer et on dispose en outre d'au moins un mélange maître dit de fond comprenant un agent colorant et une matière thermoplastique porteuse.

8. Procédé selon l'une quelconque des revendications 1 à 6, **caractérisé en ce que** la matière thermoplastique (3) est déjà colorée.

9. Procédé selon l'une quelconque des revendications 1 à 8, **caractérisé en ce que** les matières thermoplastiques à colorer ou colorées et les matières plastiques porteuses sont identiques ou différentes et sont choisies parmi les polyéthylènes, les polypropylènes, les polyamides, les polystyrènes, leurs copolymères, les élastomères et tous mélanges de ces polymères et copolymères.

10. Procédé selon l'une quelconque des revendications 1 à 9, **caractérisé en ce que** les agents colorants des mélanges maître sont à base de pigments.

11. Procédé selon l'une quelconque des revendications 1 à 3, 5 à 10, **caractérisé en ce que** le mélange maître d'apparence produit dans la matière thermoplastique des filaments (9) d'une couleur plus foncée ou plus claire.

12. Procédé selon l'une quelconque des revendications 1 à 11, **caractérisé en ce que** la partie externe (6) recouvre partiellement ou complètement la partie interne (7).

13. Procédé selon l'une quelconque des revendications 1 à 12, **caractérisé en ce que** la partie interne (7) est en un matériau choisi parmi le plastique, le bois, le métal.

14. Élément (12) de mobilier ou de la décoration, de volume simple, comprenant au moins deux parties, une partie interne (7) de soutien et une partie externe (6) d'habillage fixée à la partie interne (7), **caractérisé en ce qu'il** est obtenu par un procédé selon l'une quelconque des revendications 1 à 13.

15. Élément (12) de mobilier selon la revendication 14 consistant en un pied de lit.
